Europäisches Patentamt

European Patent Office

Office européen des brevets

(19)

(11) Veröffentlichungsnummer: **0 191 384**
**B1**

(12) **EUROPÄISCHE PATENTSCHRIFT**

(45) Veröffentlichungstag der Patentschrifft:
07.02.90

(51) Int. Cl. ⁵: **F 16 L 37/28, F 16 L 29/00**

(21) Anmeldenummer: 86101312.6

(22) Anmeldetag: 01.02.86

(54) Ventilzusammenbau.

(30) Priorität: 11.02.85 US 699755

(43) Veröffentlichungstag der Anmeldung:
20.08.86 Patentblatt 86/34

(45) Bekanntmachung des Hinweises auf die Patenterteilung:
07.02.90 Patentblatt 90/06

(84) Bennante Vertragsstaaten:
AT BE CH DE FR GB IT LI NL SE

(56) Entgegenhaltungen:
EP-A-0 113 206
DE-B-2 011 409
GB-A-2 069 083
US-A-4 549 577

(73) Patentinhaber: DEERE & COMPANY
1 John Deere Road
Moline Illinois 61265 (US)

(72) Erfinder: Kugler, Uwe Herbert
2912 Hiawatha
Cedar Falls Iowa 50613 (US)

(74) Vertreter: Feldmann, Bernhard
DEERE & COMPANY European Office, Patent
Department Steubenstrasse 36-42 Postfach 503
D-6800 Mannheim 1 (DE)

LIBERGRAF, STOCKHOLM 1990

## Beschreibung

Die Erfindung betrifft einen Ventilzusammenbau mit einem Ventilgehäuse, insbesondere für eine Kupplungshälfte einer Schnellkupplung, das in sich mindestens einen Anschlagsteil für einen beweglichen Ventilschieber aufweist und einenends von einem Ventil verschließbar ist.

Dieser Ventilzusammenbau (EP-A1-0 108 344) findet Verwendung in einer Kupplungshälfte einer Schnellkupplung und dient dort dazu, eine Strömungsverbindung zwischen einer Druckquelle und einer Schlauchkupplungshälfte auch unter druckbehafteten Betriebsbedingungen herzustellen. Hierzu ist er von dem Ventilgehäuse umschlossen und mit diesem in einem Gehäuse beweglich, um die Schlauchkupplungshälfte aufnehmen zu können. In dem Ventilzusammenbau ist ein Ventilkopf mit einem Ventilschieber vorgesehen, der das Ventilgehäuse einenends, und zwar an dem zur Schlauchkupplungshälfte führenden Ende, verschließen kann und stets unter der Wirkung einer Feder steht, die sich zwischen dem Ventilschieber und einem Anschlagsteil erstreckt. Der Ventilschieber ist sowohl in dem Ventilkopf als auch in dem Anschlagsteil radial geführt, um nicht zu verkanten. Ein weiteres Ventil schließt das Ventilgehäuse anderenends ab und steht ebenfalls ständig unter der Spannung einer Feder, die sich jedoch an dem Ventilschieber abstützt. Dieses weitere Ventil ist in einen Endteil eingebaut, der mittels eines Sicherungsringes in dem Ventilgehäuse gehalten ist. Ebenso ist der Anschlagsteil mittels eines Sicherungsringes in dem Ventilgehäuse in einer Richtung axial festgelegt, während der Ventilkopf an einem in dem Ventilgehäuse angebrachten Ringbund anliegt.

Dieser an sich sehr gut funktionierende Ventilzusammenbau ist noch änderungsfähig, soweit es seine Wartungsmöglichkeiten und seine Fertigungskosten anbelangt. Das kolbenförmige Hauptschließelement, das in einem zylindrischen Ringteil beweglich ist, muß mit kleinstmöglichen Toleranzen gefertigt werden und Toleranzabweichungen könnten unmittelbar zu Funktionsstörungen führen. Diese geringen Passungen und die Kraft der zwischen dem Hauptschließelement und dem Ringteil unter Vorspannung eingesetzten Dichtungen führen zu einem unerwünscht hohen Bewegungswiderstand beim Einsetzen einer Schlauchkupplungshälfte in den Ventilzusammenbau.

Die der Erfindung zugrunde liegende Aufgabe wird darin gesehen, den Ventilzusammenbau so zu ändern, daß er einfacher und schneller gewartet werden kann und, soweit möglich, die verwendeten Einzelteile einfacher herstellbar sind.

Diese Aufgabe ist erfindungsgemäß dadurch gelöst worden, daß das Ventilgehäuse aus mindestens zwei miteinander verbindbaren Teilen besteht, die zwischen sich den Anschlagsteil aufnehmen, daß der Ventilschieber in dem Anschlagsteil dichtend aufgenommen und das Ventil in dem Ventilschieber lose geführt ist.

Auf diese Weise wird nach dem Trennen beider Teile der Anschlagsteil frei, und der gesamte Ventilzusammenbau kann ohne das Entfernen von Sicherungsringen oder anderen Sicherungselementen zerlegt werden. Hieraus ergeben sich kurze Montier- und auch Demontierzeiten. Außerdem entfallen die Sicherungselemente. Das Ventil muß weder dichtend noch mit einer geringen Passung in dem Ventilschieber aufgenommen werden; es ist somit eine Feder mit geringer Federkraft ausreichend, um das Ventil zu betätigen. Die geringe Federkraft baut beim Einsetzen einer Schlauchkupplungshälfte in den Ventilzusammenbau einen kaum merklichen Widerstand auf.

Das Ventil wird mit relativ viel Spiel in dem Ventilschieber geführt und dient außer zum Verschließen des Ventilgehäuses einenends lediglich als Übertragungsglied zu Ventilschieber und Ventilkopf. Es wird somit unter anderem verhindert, daß der mit höherer Präzision gefertigte Ventilschieber mit dem Ventilkopf unnötig oft bewegt wird.

Dadurch, daß nach einem die Erfindung fortentwickelnden Gedanken der Ventilschieber und der Ventilkopf als ein einziger Teil ausgebildet sind und der Ventilschieber zudem in dem Anschlagsteil radial geführt ist, erfährt der Ventilschieber eine bessere Führung, und es kann auf die in dem bekannten Ventilzusammenbau vorgesehene Gleitpassung des Ventilschiebers in dem Ventilkopf verzichtet werden.

Damit beim Verbinden der Kupplungshälfte mit einer Schlauchkupplungshälfte der Ventilschieber nicht sofort an der Schlauchkupplungshälfte bzw. an einem in dieser eingangsseitig vorgesehenen Einlaßventil zur Anlage kommt, ist in vorteilhafter Weise weiterhin vorgesehen, daß in dem Ventilschieber ein Ventil beweglich aufgenommen ist, das bei druckloser Schlauchkupplungshälfte verschoben werden kann, ohne selbst auf den Ventilschieber einzuwirken.

Die Ausbildung des Ventilgehäuses derart, daß einer der beiden Teile den anderen Teil zumindest teilweise konzentrisch umgibt und mit diesem verschraubt ist, führt zu einem leicht zerlegbaren Ventilzusammenbau, dessen Einzelteile schon deshalb leicht entfernbar sind, weil das Ventilgehäuse nach seiner Zerlegung kleiner und somit sein Innenaufbau leichter zu erreichen ist. Vorzugsweise ist das Ventilgehäuse zwischen seinen axial voneinander entfernt liegenden Enden in die beiden Teile getrennt.

Bei einem Ventilzusammenbau mit einem weiteren das Ventilgehäuse anderenends verschließenden Ventil wird eine schnelle Wartungsmöglichkeit dadurch geschaffen, daß das weitere Ventil in dem einen Teil und das Ventil in dem anderen Teil angeordnet ist, so daß jeweils nur der zu wartende Teil des Ventilgehäuses demontiert zu werden braucht.

In der Zeichnung ist ein nachfolgend näher beschriebenes Ausführungsbeispiel der Erfindung dargestellt.
Es zeigt:

Figur 1 eine Kupplungshälfte eines Ventilzusam-

3

menbaues im vertikalen Längsschnitt
und

Figur 2 die Kupplungshälfte nach Figur 1 mit einer Schlauchkupplungshälfte, ebenfalls
im vertikalen Längsschnitt.

Für die folgende Beschreibung gilt, daß Begriffe wie links, rechts, oben und unten mit Blick auf die Figuren zu verstehen sind. Dies ist jedoch keine Beschränkung der Ausführungsform der Erfindung, sondern es dient lediglich einer Vereinfachung der Beschreibung.

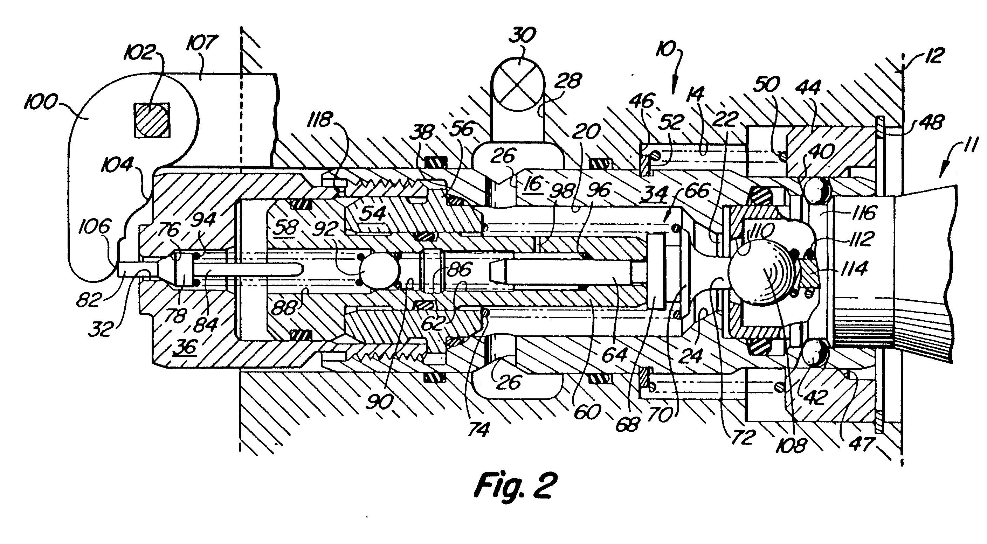

In der Zeichnung ist von einem Ventilzusammenbau eine Kupplungshälfte 10 mit einer Schlauchkupplungshälfte 11 dargestellt, die beide miteinander verbunden werden können, wie dies aus Figur 2 hervorgeht. Die Kupplungshälfte 10 weist ein Gehäuse 12 mit einer Bohrung 14 auf, die zu beiden Enden offen ist. Innerhalb der Bohrung 14 ist ein Ventilgehäuse 16 in der Form einer Hülse gleitend aufgenommen. Das Ventilgehäuse 16 hat eine Aufnahmeöffnung 18, die zu einer Seite des Gehäuses 12 offen ist und in die die Schlauchkupplungshälfte 11 eingesetzt werden kann. Ferner enthält das Ventilgehäuse 16 eine Hauptbohrung 20 und einen Kanal 22, welcher die Aufnahmeöffnung 18 mit der Hauptbohrung 20 verbindet. Die Innenfläche des Ventilgehäuses 16 ist mit einer Kegelfläche 24 versehen, die einen Ventilsitz darstellt. Das Ventilgehäuse 16 ist in diesem Ausführungsbeispiel außerdem mit mehreren Eingangsöffnungen 26 versehen, die in ständiger Verbindung mit einem Strömungskanal 28 in dem Gehäuse 12 stehen. Der Strömungskanal 28 enthält in typischer Weise ein Steuerventil 30, das die Strömung von unter Druck stehender Flüssigkeit oder von relativ druckloser aus der Hauptbohrung 20 rückfließender Flüssigkeit steuert oder das eine Flüssigkeitsströmung zu und von der Hauptbohrung 20 weg sperrt. Mit der Ausnahme einer Ausgangsöffnung 32, die im linksseitigen Ende des Ventilgehäuses 16 und koaxial zu der Längsmittenachse des Ventilgehäuses 16 angeordnet ist, ist das linksseitige Ende des Ventilgehäuses 16 geschlossen.

Das Ventilgehäuse 16 setzt sich aus einem ersten und einem zweiten Teil 34 und 36 zusammen, von denen der erste Teil 34 auch als Hauptkörper und der zweite Teil als Endkappe 36 bezeichnet werden könnten. Der erste Teil 34 ist mit der Aufnahmeöffnung 18, dem Kanal 22, dem rechten Abschnitt der Hauptbohrung 20 und den Eingangsöffnungen 26 versehen. In ihrem linken Endbereich ist die Hauptbohrung 20 in dem ersten Teil 34 abgestuft, um eine Schulter 38, mit Blickrichtung von der linken Seite, zu bilden. Sich nach links von der Schulter 38 erstreckend ist der erste Teil 34 an seinem Innenumfang mit einem Gewinde versehen, um einen auf seinem Außenumfang mit Gewinde versehenen Bereich des zweiten Teiles 36, also der Endkappe, formschlüssig aufnehmen zu können. Der zweite Teil 36 weist im wesentlichen die Form einer Kappe auf und enthält die Ausgangsöffnung 32 und ebenfalls einen Abschnitt der Hauptbohrung 20.

4

Die Außenfläche des zweiten Teils 36 ist ebenfalls abgestuft, um so einen Bereich mit einem verringerten Außendurchmesser nahe seines offenen Endes zu erhalten, auf dem dann das vorerwähnte Außengewinde zur Verbindung mit dem Innengewinde des ersten Teils 34 angebracht ist.

In das Ventilgehäuse 16 ist eine Vielzahl von Taschen 40 eingearbeitet, die sich von der Außenfläche des Ventilgehäuses 16 bis zur Aufnahmeöffnung 18 erstrecken. Die Taschen 40 sind konisch ausgebildet und nehmen jeweils eine Haltekugel 42 auf. Die Konizität der Taschen 40 sorgt dafür, daß sich die Haltekugeln 42 in die Aufnahmeöffnung 18 hinein erstrecken, jedoch nicht in diese hineinfallen können. Wenn die Haltekugeln 42 in die Aufnahmeöffnung 18 hineinreichen, schließen sie im wesentlichen bündig mit der Außenfläche des Ventilgehäuses 16 ab. In ihrem rechten Endbereich ist die Bohrung 14 abgestuft, um einen Bereich mit einem größeren Außendurchmesser zu bilden, der in den verbleibenden Teil der Bohrung 14 in der Form einer Schulter 46 übergeht. In diesem Bereich mit dem vergrößerten Außendurchmesser der Bohrung 14 ist ein Haltering 44 eingesetzt, und zwar derart, daß er die Haltekugeln 42 überdeckt, um deren Entfallen aus den Taschen 40 nach außen zu vermeiden. Die Innenfläche des Halteringes 44 hat einen Abschnitt geringeren Durchmessers, der über eine kegelige Ringfläche 47 mit einem Bereich größeren Durchmessers in Verbindung steht. Wenn sich das Ventilgehäuse 16 in seiner normalen Stellung befindet, wie sie in der Zeichnung wiedergegeben ist, dann greift der Bereich geringeren Durchmessers der Innenfläche des Halteringes 44 an den Haltekugeln 42 an und hält sie so, daß sie in die Aufnahmeöffnung 18 hineinreichen. Wenn das Ventilgehäuse 16 ausgehend von der in der Zeichnung gezeigten Stellung nach rechts geschoben wird, dann werden die Haltekugeln 42 freigegeben und können in den Bereich größeren Durchmessers des Halteringes 44 eintreten, so daß sie nicht länger in die Aufnahmeöffnung 18 hineinreichen. Der Haltering 44 wird in seiner Stellung durch einen Sicherungsring 48, der in eine Ringnut in dem Gehäuse 12 eingesetzt ist, und eine Feder 50 festgehalten, die zwischen dem Haltering 44 und einem Sicherungsring 52 wirkt, der in einer in die Außenfläche des Ventilgehäuses 16 eingearbeiteten Ringnut gehalten wird. Die Feder 50 hält das Ventilgehäuse 16 normalerweise in der in der Zeichnung dargestellten Stellung, indem sie den Sicherungsring 52 nach links in Anlage mit der Schulter 46 drängt, aber dennoch eine nach rechts gerichtete Bewegung des Ventilgehäuses 16 ermöglicht, so daß die Haltekugeln 42 freigegeben werden und in den Bereich größeren Durchmessers in dem Haltering 44 eintreten können.

Ein Anschlagsteil 54 in der Form einer Hülse ist innerhalb der Hauptbohrung 20 des Ventilgehäuses 16 untergebracht, und zwar derart, daß er einerseits den ersten Teil 34 und andererseits den zweiten Teil 36 des Ventilgehäuses 16 überlappt. Der Anschlagsteil 54 ist mit einem Flansch 56 versehen, der sich umfangsmäßig zwischen den axialen Enden des Anschlagsteiles 54 von dessen Außenfläche fort erstreckt und zwischen der Schulter 38 und dem rechten Ende des zweiten Teiles 36 gehalten wird, um den Anschlagteil 54 in einer bestimmten Stellung festzulegen.

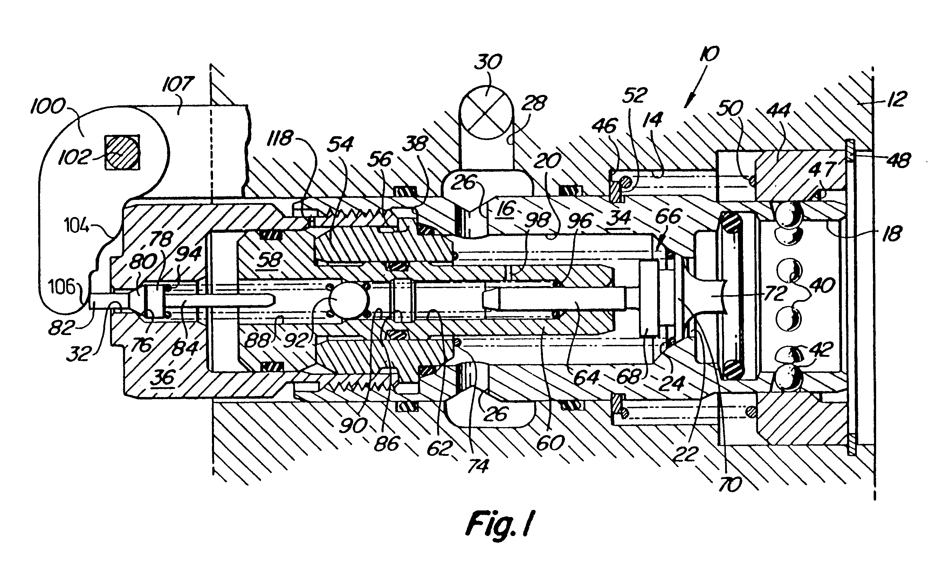

Ein Ventilkopf 58 ist gleitend in der Hauptbohrung 20 aufgenommen, um sich zwischen dem Anschlagteil 54 und dem geschlossenen linken Ende der Hauptbohrung 20 bewegen zu können. Ein Ventilschieber 60 ist einstückig mit dem Ventilkopf 58 ausgebildet und erstreckt sich ebenfalls gleitend durch eine in dem Anschlagteil 54 vorgesehene Bohrung in den rechts des Anschlagsteils 54 gelegenen Abschnitt der Hauptbohrung 20. Der Ventilkopf 58 und der Ventilschieber 60 sind mit einer Längsbohrung 62 versehen, die sich durch beide hindurch erstreckt und zu beiden Enden offen ist. Das rechte Ende der Längsbohrung 62 hat einen geringeren Innendurchmesser und nimmt gleitend einen Schaft 64 eines Ventils 66 auf. Dieses Ventil 66 enthält außerdem einen Kopfteil 68 mit einer konischen Ventilfläche 70, die dazu bestimmt ist, an der Kegelfläche 24 anzuliegen und den Kanal 22 zwischen der Hauptbohrung 20 und der Aufnahmeöffnung 18 zu verschließen. Ein Vorsprung 72 auf der dem Schaft 64 gegenüberliegenden Seite des Kopfteils 68 erstreckt sich durch den Kanal 22 in die Aufnahmeöffnung 18. Eine Feder 74 ist um den Ventilschieber 60 herum angeordnet und wirkt zwischen dem rechten Ende des Anschlagsteils 54 und dem Kopfteil 68 des Ventils 66, um dieses zu dem Kanal 22 hin zu drücken, um somit eine Verbindung zwischen der konischen Ventilfläche 70 und der Kegelfläche 24 herzustellen, wie dies in Figur 1 gezeigt ist. Die Passung des Schafts 64 in dem Bereich geringeren Durchmessers der Längsbohrung 62 kann relativ lose sein, da sie nur zu einer allgemeinen Führung des Ventils 66 dient. Diese lose Passung ermöglicht den Gebrauch einer Feder 74 mit einer relativ geringen Federkonstante, da die Feder 74 dann nur die Aufgabe hat, das Ventil 66 in seine schließende Stellung zu bewegen und nicht dazu benötigt wird, das Ventil 66 entgegen einem Flüssigkeitsdruck zu halten. Aus den nachfolgenden Erklärungen geht hervor, daß eine Feder 74 mit einer noch geringeren Federkonstante die Anstrengung verringert, die notwendig ist, die Schlauchkupplungshälfte 11 in die Kupplungshälfte 10 einzusetzen.

Die Ausgangsöffnung 32 in dem zweiten Teil 36 ist als Stufenbohrung mit zwei unterschiedlichen Innendurchmessern ausgebildet, die über eine als Ventilsitz ausgebildete Konusfläche 76 miteinander in Verbindung stehen. Normalerweise ist die Ausgangsöffnung 32 durch ein weiteres Ventil 78 geschlossen, dessen Kopfteil eine konische Ventilfläche 80 enthält, die an der Konusfläche 76 zur Anlage kommt, wenn sich das weitere Ventil 78 in seine schließende Stellung bewegt. Von dem Kopfteil des weiteren Ventils 78 erstrecken sich Axialschäfte 82 und 84 fort, wobei sich der Axialschaft 82 nach links aus dem Ende des Ventilgehäuses 16 und der Axialschaft 84 nach innen und in die Längsbohrung 62 des Ventilkopfes 58 und des Ventilschiebers 60 hinein erstreckt.

Die Längsbohrung 62 erstreckt sich durch den Ventilkopf 58 und den Ventilschieber 60 und ist mit einem Bereich größeren Durchmessers 86 zwischen ihren beiden Enden und mit einem Bereich größeren Durchmessers 88 in ihrem linken Endbereich ausgebildet. Die Bereiche größeren Durchmessers 86 und 88 sind mittels eines Steges 90 voneinander getrennt. Eine nachgiebige Kugel 92 ist in der Längsbohrung 62 im Bereich des Steges 90 vorgesehen und wird normalerweise in ihrer Stellung mit Hilfe zweier Federn 94 und 96 gehalten. Die nachgiebige Kugel 92 ist aus einem synthetischen Material, etwa Neopren, hergestellt und hat einen Außendurchmesser, der geringfügig größer ist als der Innendurchmesser der Längsbohrung 62 im Bereich des Steges 90. Die Feder 94 wirkt zwischen dem weiteren Ventil 78 und der Kugel 92, um normalerweise das weitere Ventil 78 in einer schließenden Stellung zu halten und die Kugel 92 nach rechts zu drücken. Die Feder 94 ist eine Feder mit einer relativ geringen Federkonstante, die eine sehr geringe Kraft auf die nachgiebige Kugel 92 ausübt. Der Axialschaft 84 auf dem weiteren Ventil 78 zusammen mit den Wänden der Längsbohrung 62 bewahrt die Feder 94 davor, sich seitwärts auszubiegen oder zu knicken. Die Feder 96 wirkt gegen eine Schulter in der Längsbohrung 62 und gegen die Kugel 92. Sie hat eine relativ hohe Federkonstante und befindet sich in ihrem vollkommen ausgestreckten Zustand, wenn sich die Kugel 92 in der in der Zeichnung wiedergegebenen Stellung befindet. Die Kugel 92, die Federn 94 und 96, der Steg 90 und die Bereiche größeren Durchmessers 86 und 88 der Längsbohrung 62 bilden einen Antidurchflußblockier- oder Durchflußfreihaltemechanismus, der einen Durchfluß durch die Längsbohrung 62 nach links bei einem viel geringeren Flüssigkeitsdruck zuläßt, als er einen Durchfluß von Flüssigkeit in den rechten Abschnitt der Längsbohrung 62 zulassen würde.

Es ist vorgesehen, daß Flüssigkeit in dem Bereich der Hauptbohrung 20 rechts des Anschlagsteils 54 durch die Längsbohrung 62 in dem Ventilkopf 58 und dem Ventilschieber 60 hindurch nach links zu dem linken Ende Ventilkopfes 58 fließen kann. Hierfür verläuft ein Durchgang 98 durch den Ventilschieber 60, um eine Verbindung zwischen der Längsbohrung 62 und dem Bereich der Hauptbohrung 20 rechts des Anschlagsteils 54 herzustellen. Auf den Durchgang 98 kann auch verzichtet werden, wenn die Passung zwischen dem Schaft 64 des Ventils 66 und dem Bereich geringeren Durchmessers der Längsbohrung 62 in deren rechten Endbereich ausreichend lose ist, so daß trotz der gegebenen Verengung eine Flüssigkeitsströmung stattfinden kann.

Ein hebelbetätigter Nocken 100 ist um einen Bolzen 102 schwenkbar an dem Gehäuse 12 angebracht. Der Nocken 100 enthält einen Ventilgehäusevorsprung 104 und einen Ventilvorsprung 106 für das weitere Ventil 78. Ein Hebel 107 ist mit dem Nocken 100 verbunden und bewirkt dessen Schwenkung, nachdem er bewegt worden ist. Sobald der Hebel 107 angehoben wird, schwenkt der Nocken 100 entgegen dem Uhrzeigerdrehsinn, so daß der Ventilgehäusevorsprung 104 auf das Ventilgehäuse 16 einwirkt und dieses nach rechts entgegen der Wirkung der Feder 50 bewegt. Fast gleichzeitig legt auch der Ventilvorsprung 106 an dem Axialschaft 82 des weiteren Ventils 78 an, um die Ausgangsöffnung 32 zu öffnen und die sich links des Ventilkopfes 58 in der Hauptbohrung 20 befindliche Druckflüssigkeit ausströmen zu lassen. Die Bewegung des Nockens 100 wird mittels der Einwirkung des Ventilgehäusevorsprunges 104 das Ventilgehäuse 16 ausreichend weit nach rechts verschieben, so daß sich die Haltekugeln 42 in den Bereich größeren Durchmessers des Halteringes 44 bewegen können.

Im folgenden wird Bezug auf das in Figur 2 Gezeigte genommen, aus dem hervorgeht, wie die Schlauchkupplungshälfte 11 mit der Kupplungshälfte 10 verbunden ist. Es ist ersichtlich, daß die Schlauchkupplungshälfte 11 eine Rückschlagventilkugel 108, einen Sitz 110 für die Rückschlagventilkugel 108, eine Feder 112, welche die Rückschlagventilkugel 108 zu dem Sitz 110 hin drängt, und einen Anschlag 114, welcher die Bewegung der Rückschlagventilkugel 108 fort von dem Sitz 110 begrenzt, enthält. Die Schlauchkupplungshälfte 11 ist ebenfalls mit einer Ringnut 116 auf ihrer Außenfläche versehen, in die sich die Haltekugeln 42 hinein erstrecken können, wenn die Schlauchkupplungshälfte 11 vollkommen in die Kupplungshälfte 10 eingeschoben ist. Die Schlauchkupplungshälfte 11 befindet sich in typischer Weise an dem Ende eines an sich nicht gezeigten Hydraulikschlauches, der zu einer von dem Gehäuse 12 entfernten Hydraulikfunktion führt.

Wenn die Kupplungshälfte 10 nicht mit einer Schlauchkupplungshälfte 11 verbunden ist, nehmen alle Einzelteile die in Figur 1 gezeigte Stellung ein. Das heißt, das Ventilgehäuse 16 befindet sich in seiner extrem links gelegenen Stellung, wobei der Sicherungsring 52 an der Schulter 46 anschlägt, das Ventil 66 und das weitere Ventil 78 befinden sich in ihrer schließenden Stellung, und die nachgiebige Kugel 92 wird in dem linken Bereich des Steges 90 in der Längsbohrung 62 gehalten. Zum Anschließen einer Druckflüssigkeit enthaltenden Schlauchkupplungshälfte 11 muß eine Bedienungsperson den Hebel 107 anheben, um eine Schwenkbewegung des Nockens 100 entgegen dem Uhrzeigerdrehsinn zu bewirken. Aufgrund dieser Schwenkbewegung des Nockens 100 wird der Ventilgehäusevorsprung 104 an dem Ventilgehäuse 16 zur Anlage gebracht und bewegt dieses nach rechts. Fast gleichzeitig berührt der Ventilvorsprung 106 den Axialschaft 82 des weiteren Ventils 78, um die Ausgangsöffnung 32 zu öffnen und Flüssigkeit, die sich links des Ventilkopfes 58 befinden kann, abströmen zu lassen. Der Nocken 100 wird so lange verschwenkt, bis das Ventilgehäuse 16 so weit nach rechts bewegt worden ist, daß die Haltekugeln 42 sich entlang der kegeligen Ringfläche 47 in den Bereich größeren Durchmessers der Innenfläche des Halteringes 44 bewegen. Zu diesem Zeitpunkt kann die Schlauchkupplungshälfte 11 in die Aufnahmeöffnung 18 eingeschoben werden. Nach einem teilweisen Einschieben der Schlauchkupplungshälfte 11 in die Aufnahmeöffnung 18 gelangt der Vorsprung 72 an dem Kopfteil 68 des Ventils 66 zur Anlage an der Rückschlagventilkugel 108 in der Schlauchkupplungshälfte 11 und bewegt den Schaft 64 nach links, um die Ventilfläche 70 von der Kegelfläche 24 zu öffnen. Nach einer bestimmten Bewegung des Ventils 66 nach links schlägt es an der rechten Seite des Ventilschiebers 60 an und bewegt diesen zusammen mit dem Ventilkopf 58 nach links. Nach dem vollständigen Einschieben der Schlauchkupplungshälfte 11 in die Aufnahmeöffnung 18 gerät die Ringnut 116 in der Schlauchkupplungshälfte 11 in Flucht mit den Haltekugeln 42. Die Bedienungsperson kann dann den Hebel 107 loslassen, und die Feder 50, die auf den Sicherungsring 52 wirkt, bewegt dann das Ventilgehäuse 16 nach links. Da das Ventilgehäuse 16 sich nach links bewegt, bewegen sich die Haltekugeln 42 entlang der kegeligen Ringfläche 47 zu dem Bereich geringeren Durchmessers der Innenfläche des Halteringes 44 und erstrecken sich in die Ringnut 116, um die Schlauchkupplungshälfte 11 in der Aufnahmeöffnung 18 zu halten.

Um die Rückschlagventilkugel 108 in der Schlauchkupplungshälfte 11 von ihrem Sitz 110 abzuheben, muß die Bedienungsperson das Steuerventil 30 in eine Stellung bringen, in der Druckflüssigkeit durch den Strömungskanal 28 und die Eingangsöffnungen 26 zu der Hauptbohrung 20 gelangt. Diese Druckflüssigkeit wird dann durch den Durchgang 98 und/oder zwischen dem Schaft 64 des Ventils 66 und seiner ihn aufnehmenden Bohrung hindurch zu der Längsbohrung 62 fließen. Dieser Flüssigkeitsdruck, der auf die nachgiebige Kugel 92 wirkt, wird diese entgegen der Wirkung der Feder 94 in den Bereich größeren Durchmessers 88 der Längsbohrung 62 drängen, so daß die Flüssigkeit frei ist, an der Kugel 92 vorbei zu dem linken Ende des Ventilkopfes 58 zu fließen. Sobald sich dort ein Flüssigkeitsdruck aufbaut, ist der Flüssigkeitsdruck links des Ventilkopfes 58 geringfügig geringer als der Flüssigkeitsdruck in der Hauptbohrung 20 rechts des Anschlagteils 54, und zwar aufgrund des durch die Wirkung der Feder 94 hervorgerufenen Druckabfalls. Da sich links des Ventilkopfes 58 ein Druck aufbaut, wird der Ventilkopf 58 zusammen mit dem Ventilschieber 60 und dem Ventil 66 nach rechts gedrängt und hebt die Rückschlagventilkugel 108 von ihrem Sitz 110 ab, und zwar so lange, bis der Ventilkopf 58 an dem Anschlagteil 54 anschlägt. Es ist aus der Zeichnung ersichtlich, daß der Anschlagteil 54 zusammen mit einer in ihm zwischen seiner Bohrung und der Außenfläche des Ventilschiebers 60 eingesetzten Gleitdichtung den Aufbau eines Flüssigkeitsdruckes, der auf die rechte Seite des Ventilkopfes 58 wirkt, verhindert. Sollte dort dennoch eine Leckage auftreten, dann wird die Leckflüssigkeit durch einen Ausgang 118, der in dem zweiten Teil 36 vorgesehen ist, abgeführt. Wenn sich der Ventilkopf 58 auf seine am weitesten rechts gelegene Stellung zubewegt, erhöht sich der Flüssigkeitsdruck auf dessen linker Seite, der zugleich auf die Kugel 92 wirkt, zusammen mit der Kraft der Feder 94, bis er den Flüssigkeitsdruck auf der rechten Seite der Kugel 92 überwinden und die Kugel 92 in ihre sperrende Stellung in den Bereich des Steges 90 der Längsbohrung 62 zurückbewegen kann.

Die Feder 96, die auf die Kugel 92 wirkt, verhindert, daß Flüssigkeitsdruck sich an der linken Seite des Ventilkopfes 58 abbaut, es sei denn, dieser Flüssigkeitsdruck steigt auf ein Maß an, das oberhalb des Flüssigkeitsdruckes in dem Abschnitt der Längsbohrung 62 auf der rechten Seite der Kugel 92 liegt. Der in dem linken Abschnitt der Hauptbohrung 20 zurückbleibende Flüssigkeitsdruck ist ausreichend hoch, um die Rückschlagventilkugel 108 der Schlauchkupplungshälfte 11 von ihrem Sitz 110 entfernt zu halten, falls die Kupplungshälfte 10 einem Vakuum, das auf einen Sog in dem Hydraulikschlauch, der mit der Schlauchkupplungshälfte 11 verbunden ist, folgt, unterliegen sollte. Sollte jedoch der Flüssigkeitsdruck an der linken Seite des Ventilkopfes 58 aufgrund von Wärmedehnung oder aus einem anderen Grund über ein vertretbares Maß ansteigen, dann wird dieser Flüssigkeitsdruck, der zugleich auf die Kugel 92 einwirkt, die Feder 96 zusammendrücken und die Kugel 92 in den Bereich größeren Durchmessers 86 der Längsbohrung 62 bewegen, so daß die Flüssigkeit um die Kugel 92 herum nach rechts abfließen und den links angestiegenen Flüssigkeitsdruck abbauen kann. Sobald der Flüssigkeitsdruck abgebaut ist, wird die Feder 96 die Kugel 92 zurück in den durch den Steg 92 definierten Bereich der Längsbohrung 62 bringen.

Die Vorteile der Kupplungshälfte 10 nach dieser Erfindung sind sehr einfach im Vergleich mit der Ausführungsform der Kupplungshälfte 10 gemäß dem eingangs erwähnten Stand der Technik zu erfassen. Bei der Kupplungshälfte 10 gemäß der Ausführungsform dieser Erfindung ist das Ventilgehäuse 16 aus einem ersten und einem zweiten Teil 34 und 36 zusammengesetzt, die miteinander verschraubt sind, damit sie auf einfache Weise zusammengebaut und zerlegt werden können. Dieser erste und zweite Teil 34 und 36 dienen dazu, den Anschlagsteil 54 in einer bestimmten Stellung innerhalb der Hauptbohrung 20 zu halten. Der einfache Aufbau erbringt wesentliche Vorteile bezüglich der Wartung der Kupplungshälfte 10. Bei der Kupplungshälfte gemäß dem Stand der Technik wurde eine in das Ventilgehäuse eingesetzte Endkappe und der Anschlagsteil jeweils mittels eines Sicherungsringes in ihrer Stellung gehalten, was gegebenenfalls zu längeren Montage- oder Demontagezeiten führen konnte.

Bei der Ausführungsform dieser Erfindung bewegt sich das Ventil 66 unabhängig von dem Ventilkopf 58 und dem Ventilschieber 60, die gemeinsam einen einstückigen Ventilteil bilden, und es verschiebt sich lose in einer kleinen Bohrung, so daß geringe Kräfte erforderlich sind, das Ventil 66 in seine schließende Stellung zu bringen. Dieses vorzügliche Merkmal erlaubt es, daß eine Feder mit einer geringen Federkonstante verwendet werden kann, was zu einer Kosteneinsparung und zu einer leichten Montierbarkeit führt.

## Patentansprüche

1. Ventilzusammenbau mit einem Ventilgehäuse (16), insbesondere für eine Kupplungshälfte (10) einer Schnellkupplung, das in sich mindestens einen Anschlagteil (54) für einen beweglichen Ventilschieber (60) aufweist und einenends von einem Ventil (66) verschließbar ist, dadurch gekennzeichnet, daß das Ventilgehäuse (16) aus mindestens zwei Teilen (34, 36) besteht, die zwischen sich den Anschlagteil (54) aufnehmen, daß der Ventilschieber (60) in dem Anschlagteil (54) dichtend aufgenommen und das Ventil (66) in dem Ventilschieber (60) lose geführt ist.

2. Ventilzusammenbau nach Anspruch 1, wobei der Ventilschieber (60) in dem Anschlagteil (54) radial geführt ist, mit einem Ventilkopf (58), dadurch gekennzeichnet, daß der Ventilschieber (60) und der Ventilkopf (58) als ein Teil ausgebildet sind.

3. Ventilzusammenbau nach Anspruch 2 mit einem das Ventilgehäuse (16) einenends verschließenden Ventil (66), dadurch gekennzeichnet, daß das Ventil (66) in dem Ventilschieber (60) beweglich geführt ist.

4. Ventilzusammenbau nach Anspruch 1, dadurch gekennzeichnet, daß einer der beiden Teile (34 oder 36) den anderen Teil (36 oder 34) zumindest teilweise konzentrisch umgibt und mit diesem verschraubt ist.

5. Ventilzusammenbau nach Anspruch 1 mit einem weiteren das Ventilgehäuse (16) anderenends verschließenden Ventil (78), dadurch gekennzeichnet, daß das weitere Ventil (78) in dem einen Teil (36) und das Ventil (66) in dem anderen Teil (34) angeordnet ist.

## Claims

1. Valve assembly with a valve housing (16), especially for one coupling half (10) of a fast-acting clutch, which housing comprises therein at least one stop part (54) for a movable valve slide (60) and is closable at one end by a valve (66), characterized in that the valve housing (16) consists of at least two parts (34, 36), which receive the stop part (54) therebetween, in that the valve slide (60) is received in the stop part (54) in sealed manner and the valve (66) is guided free in the valve slide (60).

2. Valve assembly according to claim 1, wherein the valve slide (60) is guided radially in the stop part (54), with a valve head (58), characterized in that the valve slide (60) and the valve head (58) are formed in one piece.

3. Valve assembly according to claim 2 with a valve (66) closing the valve housing (16) at one end, characterized in that the valve (66) is movably guided in the valve slide (60).

4. Valve assembly according to claim 1, characterized in that one of the two parts (34 or 36) concentrically surrounds at least partially the other part (36 or 34) and is screwed thereto.

5. Valve assembly according to claim 1 with a further valve (78) closing the valve housing (16) at the other end, characterized in that the further valve (78) is arranged in the one part (36) and the valve (66) in the other part (34).

**Revendications**

1. Ensemble de soupape comportant une cage de soupape (16), en particulier pour un demi-accouplement (10) d'un raccord instantané, qui comporte en son intérieur au moins un élément de butée (54) pour un tiroir de soupape mobile (60) et peut être fermé à l'une de ses extrémités par une soupape (66), caractérisé en ce que la cage de soupape (16) comprend au moins deux parties (34, 36) qui reçoivent entre elles l'élément de butée (54), en ce que le tiroir de soupape (60) est reçu de façon étanche dans l'élément de butée (54) et en ce que la soupape (66) est guidée librement dans le tiroir de soupape (60).

2. Ensemble de soupape selon la revendication 1, où le tiroir de soupape (60) est guidé radialement dans l'élément de butée (54), comportant une tête de soupape (58), caractérisé en ce que le tiroir de soupape (60) et la tête de soupape (58) sont réalisés en une seule pièce.

3. Ensemble de soupape selon la revendication 2 comportant une soupape (66) fermant la cage de soupape (16) à une extrémité, caractérisé en ce que la soupape (66) est guidée de façon à être mobile dans le tiroir de soupape (60).

4. Ensemble de soupape selon la revendication 1, caractérisé en ce que l'une des deux parties (34 ou 36) entoure concentriquement au moins partiellement l'autre partie (34 ou 36) et lui est vissée.

5. Ensemble de soupape selon la revendication 1 comportant une autre soupape (78) fermant la cage (16) à l'autre extrémité, caractérisé en ce que l'autre soupape (78) est disposée dans la première partie (36) et la soupape (66) dans la seconde partie (34).

*Fig. I*

Fig. 2

EP 0 191 384 B1